# EUROPEAN PATENT SPECIFICATION

(11) **EP 1 685 079 B1**
(45) Date of publication and mention of the grant of the patent: **11.02.2009**
(21) Application number: 04765867.9
(22) Date of filing: 07.10.2004
(51) Int. Cl.: C04B 37/02, F28F 21/02

(54) **PROCESS TO JOIN CARBON BASED MATERIALS TO METALS AND ITS APPLICATIONS**
VERFAHREN ZUM VERBINDEN VON AUF KOHLENSTOFF BASIERENDEN MATERIALIEN MIT METALLEN UND ANWENDUNGEN DAVON
PROCEDES D'ASSEMBLAGE DE MATERIAUX A BASE DE CARBONE A DES METAUX ET APPLICATIONS ASSOCIEES

(30) Priority: 09.10.2003 IT TO20030795
(43) Date of publication of application: 02.08.2006
(73) Proprietor: POLITECNICO DI TORINO, 10129 Torino (IT)
(72) Inventor: FERRARIS, Monica, I-10020 BALDISSERO TORINESE- RIVO DORA (Torino) (IT); CASALEGNO, Valentina, I-10134 Torino (IT); SALVO, Milena, I-10134 Torino (IT)
(74) Representative: Rambelli, Paolo
(86) International application number: PCT/EP2004/011202
(87) International publication number: WO 2005/037734

(56) References cited:
- EP-A- 0 638 530
- US-A- 5 806 588
- APPENDINO P ET AL: "Joining of C/C composites to copper" FUSION ENGINEERING AND DESIGN, ELSEVIER SCIENCE PUBLISHERS, AMSTERDAM, NL, vol. 66-68, September 2003 (2003-09), pages 225-229, XP004456477 ISSN: 0920-3796
- APPENDINO P ET AL: "Direct joining of CFC to copper" JOURNAL OF NUCLEAR MATERIALS, AMSTERDAM, NL, vol. 329-333, 1 August 2004 (2004-08-01), pages 1563-1566, XP004524639 ISSN: 0022-3115

## Description

The present invention concerns a process to join carbon based materials to metals. In particular, the carbon based materials, to which the invention relates, comprise graphite and carbon matrix composite materials with high temperature properties, such as carbon fiber reinforced carbon matrix composites (C/C composites).

Thanks to their excellent properties, such as very high mechanical and thermal shock resistance, low density, elevate refractoriness and good dimensional stability, the C/C composites can find application in different fields: automotive, aerospace, energy production and nuclear fields.

The C/C composites are used for nuclear applications, in particular as plasma facing materials, because of their excellent thermal fatigue resistance, high electric resistance, very low neutron activation and high sublimation temperature (above 3000°C).

A severe limitation to the use of C/C composites and other carbon based materials is the joining process: these materials can not be joined by traditional techniques to metals, particularly to copper.

In the nuclear field, the joint between C/C and copper is necessary to connect different structural and functional components of the reactor, such as the first wall, the divertor and the heat sink.

The C/C composites are used as plasma facing materials because of their high thermal conductivity. In order to remove the high heat flux on the divertor, the C/C composites must be joined to the copper cooling channels of the heat sink.

The joining of carbon based materials, for example C/C composites, to metals is difficult because of the very low wettability of molten metals (particularly copper) on carbon substrates, the mismatch between the thermal expansion coefficients of carbon based materials and metals, the sublimation of carbon at high temperature and the low compression resistance of C/C composites.

Other problems are related to the nuclear application field: the joint must have thermomechanical properties not lower than the composite ones, high thermodynamic stability of the joint interfaces at the working conditions and low neutron activation of the joining material.

US 5 023 043 describes a heat shield for a fusion reactor, which includes elements of a heat-resistant material, particularly graphite, each being provided with at least one recess having a circular cross section, particularly a groove, into which a molybdenum based cooling pipe conducting a coolant is brazed directly by a silver based brazing alloy including small quantity of copper and titanium. A durable and resistant brazed connection of graphite and metal is assured only if the metal has at least approximately the same coefficient of thermal expansion as graphite: this requirement implies the use of cooling pipes made of molybdenum and some molybdenum alloys.

US 5 533 258 describes a process for the manufacture of a cooling unit particularly for fusion reactors. The cooling unit consists of one or more parts made of heat-resistant material, preferably graphite, which are joined to at least one metallic coolant conduit, preferably made of copper or a copper alloy. The joint is produced by bringing molten metal of the coolant conduit into contact with the parts made of heat-resistant material. One or more metals of the secondary groups IV and/or V of the periodic table, preferably titanium, are introduced at the contact surface between the coolant conduit and the heat-resistant parts.

The metal of the coolant conduit is thereafter cooled to solidify the coolant conduit in the desired shape. The industrial process was named Active Metal Casting (AMC).

US 5 855 313 describes a two-step process for joining two components with different thermal expansion coefficients, particularly useful for joining carbon-carbon composite parts to copper substrates. The first step of the process consists of a high temperature brazing cycle that joins a thin copper anchor layer to the joint surface of the low CTE C/C composites. The second step of the process is a significantly lower temperature brazing cycle that joins the copper anchor layer to the joint surface of the high CTE copper alloy part by a aluminum-silicon brazing alloy.

US 5 904 287 describes a method for bonding graphite to metal, including the steps of forming a metal carbide layer (tantalum carbide, zirconium carbide or niobium carbide) on a surface of the graphite and the brazing of the carbide to the metal by brazing alloy including titanium.

US-A-5 806 588 discloses a method for joining a carbon-carbon material to a metal (braze), wherein in said metal is put into contact, in the molten state, with the carbon-based material, which has a surface modified by forming a tungsten carbide layer.

Document of P. Appendino et al. "Joining of C/C composites to copper", Fusion Engineering and Design, Elsevier Science Publisher, Amsterdam, NL, vol. 66-68, September 2003 (2003-9), pages 225-229, XP004456477 ISSN: 0920-3796 discloses the same method, but refers to a transition metal carbides in general.

EP-A-0 638 530 discloses graphite coated with metal carbides before joining to metal.

It is an object of the present invention to provide a new method for bonding carbon based materials to metal: this method is low cost, it uses reduced temperatures and pressures and, then, it is suitable for the industrial applications.

In view of the above mentioned object, the subject matter of the invention is a method as defined by the appended claims.

The process provides for the surface modification of the carbon based material by forming a superficial layer of chromium carbide, followed by the melting of the metal, namely copper or a copper alloy, on the so modified surface.

The surface modification of the carbon based material is preferably performed by depositing chromium on the surface to be modified, followed by the heat treatment in inert atmosphere or under vacuum to produce the metal carbide, that is well wetted by molten copper.

Even if many techniques can be used for the metal deposition, this deposition is preferably carried out by the slurry technique wherein a metal powder suspension is applied on the surface to be modified.

The suspension is obtained by mixing the metal powders and an inert binder, for example ethyl alcohol, at room temperature. The metal powder concentration should preferably allow the preparation of a smearing suspension that can be deposited for example by a spatula.

The thermal treatment to produce the carbide is generally performed at a temperature between 1200°C and 1400°c for chromium and between 1400°C and 1600°C for tungsten, and dwelling time between 30 min and 120 min or in any case a dwelling time sufficient to obtain a carbide layer of thickness between 2 and 40 µm, preferably from 5 to 20 µm.

The thermal treatment to form the carbide can also be performed in a hot press by using an appropriate die, to promote the solid state reaction between the deposited metal and the surface of the carbon based material.

Anyway, in particular in the case of C/C composites, the thermal treatment can also be performed without using a die and external pressure.

The metal to be joined, namely copper or copper alloy, is used as powder or sheet. The metal is posed on the modified surface of the composite and than it is heated above its melting point at a temperature between 1100°C and 1200°C. The metal melting can also be performed in a hot-press under vacuum or under a low pressure.

The described process is particularly suitable for carbon matrix composites and, principally, for C/C composites. Furthermore, the process is applicable to silicon doped C/C composites, which are not joinable by known methods.

In particular, the described method is applicable to silicon doped C/C composites without removing silicon in the joining region before the metal suspension deposition.

In addition, in the described method, the mechanical machining of the composite surface is not necessary to increase the mechanical strength of the realized joints. The mechanical strength of these joints is high, also without the machining of the surfaces to be joined, in particular laser machining, as described in US 5 160 090.

The described process can be up scaled and used for the production of cooling units in fusion reactors, where the plasma facing materials, typically C/C composites (undoped or silicon doped), must be joined to metal (copper or copper alloy) cooling pipes.

In particular, the surface modification - optionally under pressure or vacuum- is applicable to flat surfaces (flat-tile) and to curved surfaces and inside blocks (monoblock).

The following example describes one of the possible applications of the method and it is not restrictive.

### Example 1

The C/C and the copper OFHC (Oxigen Free High Conductivity) sheet are cut in the same dimensions, and then the parts are cleaned in an ultrasonic bath: the C/C and copper pieces are separately put into a beaker with acetone in an ultrasonic bath for about 10 minutes.

The C/C is, then, air dried to allow the residual acetone evaporation. After that, the deposition of the Cr slurry on the C/C surface is performed. The slurry is obtained by dispersing chromium powder in ethyl alcohol. The suspension was mixed and then deposited by a spatula on the C/C surface.

After the alcohol evaporation from the deposited slurry, the C/C is put in a furnace; the heat treatment to produce chromium carbide on the C/C surface is carried out at 1300°C, for 60 minutes, under vacuum.

Now, the so modified C/C surface is wettable by molten copper.

They copper, cut and cleaned, is put in a graphite sample holder, where was previously put the surface modified C/C. The surface, modified by chromium, is in contact with the copper sheet. The graphite sample holder is, then, closed by a graphite cover; a weight is put on the cover and the pressure on the sample is about 1 kPa. The sample holder is then heated in a furnace at 1100°C for 60 minutes in inert atmosphere (argon). The heating rate is 1000°C/hour. The samples, after cooling to room temperature, are joined. The morphological analysis of these samples was performed by optical and electronic microscopy: no cracks or other defects are present at the composite/copper interface and in the two joined parts.

Some samples, produced as described before, were submitted to thermal fatigue tests: heating in 1 minute from 25°C to 450°C and cooling to 25°C in 3 seconds in air. This cycle was repeated 30 times. After the tests, the samples did not show macroscopic and microscopic defects (cracks).

Some samples, produced as described before, were submitted to shear strength tests. The average shear strength of these joints was 34 MPa, this value is higher than the interlaminar shear strength of the C/C composites (20-25 MPa).

## Claims

1. A method to join a carbon based material to a metal selected from copper and copper alloy, wherein said metal is put in contact, at the molten state, with the carbon based material surface, **characterised in that** said surface is modified by forming a surface chromium carbide layer.

2. The method according to claim 1, wherein the surface chromium carbide layer is obtained by the deposition on the carbon based materials surface of a chromium suspension, followed by the heat treatment of the deposed suspension to produce the carbide.

3. The method according to claim 2, wherein the suspension is constituted by chromium powders in an alcoholic binder.

4. The method according to any of claims 1 to 3, wherein the surface chromium carbide layer has a thickness from 5 to 20 µm.

5. The method according to any of claims 1 to 4, wherein the metal to be joined, in powder or sheet form, is deposed on the carbide modified surface of the carbon based material and, then, it is molten, optionally under pressure.

6. The method according to any of claims 1 to 5, wherein the carbon based materials is chosen among graphite, carbon matrix composites, fibre reinforced carbon matrix composites, carbon fibre reinforced carbon matrix composites, silicon doped carbon fibre reinforced carbon matrix composites.

7. The method according to any one of the previous claims to join a metallic pipe to a carbon based heat resistant element.

8. The method according to claim 7 to produce the heat sink in a nuclear reactor, where a carbon matrix composite thermal component is connected to copper or copper alloy cooling pipes.

## Patentansprüche

1. Verfahren zum Verbinden eines auf Kohlenstoff basierenden Materials mit einem Metall, ausgewählt aus Kupfer und Kupferlegierung, wobei das Metall im geschmolzenen Zustand mit der Oberfläche des auf Kohlenstoff basierenden Materials in Kontakt gebracht wird, **dadurch gekennzeichnet, dass** die Oberfläche durch Bildung einer Chromcarbidoberflächenschicht modifiziert wird.

2. Verfahren gemäß Anspruch 1, wobei die Chromcarbidoberflächenschicht durch Ablagerung einer Chromsuspension auf der Oberfläche der auf Kohlenstoff basierenden Materialien, gefolgt von der Wärmebehandlung der abgelagerten Suspension zur Herstellung des Carbids, erhalten wird.

3. Verfahren gemäß Anspruch 2, wobei die Suspension durch Chrompulver in einem alkoholischen Bindemittel gebildet wird.

4. Verfahren gemäß einem der Ansprüche 1 bis 3, wobei die Chromcarbidoberflächenschicht eine Dicke von 5 bis 20 µm aufweist.

5. Verfahren gemäß einem der Ansprüche 1 bis 4, wobei das zu verbindende Metall in Pulver- oder Blechform auf der carbidmodifizierten Oberfläche des auf Kohlenstoff basierenden Materials abgelagert und dann gegebenenfalls unter Druck geschmolzen wird.

6. Verfahren gemäß einem der Ansprüche 1 bis 5, wobei die auf Kohlenstoff basierenden Materialien aus Graphit, Kohlenstoffmatrix-Verbundstoffen, faserverstärkten Kohlenstoffmatrix-Verbundstoffen, kohlefaserverstärkten Kohlenstoffmatrix-Verbundstoffen, siliciumdotierten kohlefaserverstärkten Kohlenstoffmatrix-Verbundstoffen ausgewählt sind.

7. Verfahren gemäß einem der vorhergehenden Ansprüche zum Verbinden eines Metallrohrs mit einem auf Kohlenstoff basierenden hitzebeständigen Element.

8. Verfahren gemäß Anspruch 7 zum Herstellen der Wärmesenke in einem Kernreaktor, wo eine thermische Kohlenstoffmatrix-Verbundstoffkomponente mit Kupfer- oder Kupferlegierungskühlrohren verbunden wird.

## Revendications

1. Procédé pour réunir un matériau à base de carbone sur un métal choisi parmi le cuivre et un alliage de cuivre, dans lequel ledit métal est mis en contact, à l'état fondu, avec la surface du matériau à base de carbone, **caractérisé en ce que** ladite surface est modifiée en formant une couche de carbure de chrome en surface.

2. Procédé selon la revendication 1, dans lequel la couche de carbure de chrome en surface est obtenue par le dépôt sur la surface de matériaux à base de carbone d'une suspension de chrome, suivi par le traitement thermique de la suspension déposée pour produire le carbure.

3. Procédé selon la revendication 2, dans lequel la suspension est constituée par des poudres de chrome dans un liant alcoolique.

4. Procédé selon l'une quelconque des revendications 1 à 3, dans lequel la couche de carbure de chrome en surface présente une épaisseur de 5 à 20 µm.

5. Procédé selon l'une quelconque des revendications 1 à 4, dans lequel le métal à réunir, sous forme de poudre ou de feuille, est déposé sur la surface modifiée de carbure du matériau à base de carbone et ensuite il est mis en fusion, facultativement sous pression.

6. Procédé selon l'une quelconque des revendications 1 à 5, dans lequel les matériaux à base de carbone sont choisis parmi le graphite, les composites à matrice de carbone, les composites à matrice de carbone renforcé par fibres, les composites à matrice de carbone renforcée par fibres de carbone, les composites à matrice de carbone renforcée par fibres de carbone dopé au silicium.

7. Procédé selon l'une quelconque des revendications précédentes pour souder un tuyau métallique sur un élément résistant à la chaleur à base de carbone.

8. Procédé selon la revendication 7 pour produire le pont thermique dans un réacteur nucléaire, dans lequel le composant thermique composite à matrice de carbone est raccordé au cuivre ou à des conduites de refroidissement en alliage de cuivre.
